# EUROPÄISCHE PATENTSCHRIFT

(11) **EP 0 691 878 B1**
(45) Veröffentlichungstag und Bekanntmachung des Hinweises auf die Patenterteilung: **18.12.1996**
(21) Anmeldenummer: 94911184.3
(22) Anmeldetag: 16.03.1994
(51) Int. Cl.: B01D 39/20, E03B 3/18

(54) **FILTER**
FILTER
FILTRE

(30) Priorität: 02.04.1993 DE 4310725
(43) Veröffentlichungstag der Anmeldung: 17.01.1996
(73) Patentinhaber: Henkel Kommanditgesellschaft auf Aktien, 40191 Düsseldorf (DE); LAUSITZER BRAUNKOHLE AKTIENGESELLSCHAFT (LAUBAG), D-01968 Senftenberg (DE)
(72) Erfinder: KOHLSTADT, Hans-Peter, D-42549 Velbert (DE); MARTEN, Klaus, D-41542 Dormagen (DE); THIELE, Lothar, D-42799 Leichlingen (DE); FAHLE, Werner, D-03048 Cottbus (DE); TOST, Rainer, D-03042 Cottbus (DE)
(86) Internationale Anmeldenummer: EP9400835
(87) Internationale Veröffentlichungsnummer: WO9422554

(56) Entgegenhaltungen:
- EP-A- 0 468 608
- PATENT ABSTRACTS OF JAPAN vol. 5, no. 184 (C-060) 21. November 1981 & JP,A,56 106 915 (TOYOTA MOTOR CORP.) 25. August 1981

## Beschreibung

Die Erfindung betrifft einen Filter aus einer mit Polyurethan gebundenen Feststoffschicht aus Quarzsand zur Fassung und Hebung von Grundwasser, zur Aufbereitung von Brauch- und Trinkwasser bzw. zur Infiltration von Wasser in den Boden sowie seine Herstellung und Verwendung in Tagebaugebieten.

Ein derartiger Filter für Tagebaugebiete ist aus der DD 109 319 bekannt. Dort wird ein Filterkörper beschrieben, der aus trockenen körnigen, als Filtermaterial geeigneten Bestandteilen und einem Zweikomponenten-Polyurethan-Klebstoff hergestellt wurde, wobei das Gewichtsverhältnis mindestens 20 : 1 beträgt. Als körniges Filtermaterial wird vorzugsweise Kiessand mit einer Körnung von 1,6 bis 3,5 mm verwendet. Die Mischung der beiden Bestandteile wird vorzugsweise in Gegenwart eines Katalysators bei Temperaturen nicht oberhalb von 120 °C ausgehärtet.
Der bekannte Filter hat den Nachteil, nicht zur Trinkwassergewinnung geeignet zu sein, da das Filtrat schäumt und organisch gebundenen Kohlenstoff in unzulässiger Menge enthält. Außerdem werden Filter aus Quarzsand mit Staubanteil, die mit einem Polyurethan-Klebstoff ohne Modifizierungsmittel hergestellt wurden, bei einer Lagerung in Wasser weich.

Bekannt ist auch nach der europäischen Anmeldung 0 468 608 ein Entwässerungselement aus einem Materialgemisch, das sich aus 20 bis 30 Masseteilen getrocknetem Filterkies als Zuschlagstoff und einem Masseteil Reaktionsharz auf der Basis Polyurethan als Bindemittel zusammensetzt.

Der Staubanteil im Filterkies wirkt sich hinderlich beim Herstellungsverfahren der Entwässerungselemente aus.
Bei Verwendung des nicht näher definierten Polyurethanbindemittels läßt sich das Entwässerungselement sehr schwer bis gar nicht aus der Form entfernen. Der Anteil der verwendungsfähigen Elemente ist niedrig. Darüber hinaus nimmt die Bindemittelkonzentration von oben nach unten in den einzelnen Elementen deutlich zu. Es wird keine durchgängige Festigkeit des Entwässerungselementes erreicht.

Die erfindungsgemäße Aufgabe besteht also darin, möglichst kostengünstig einen Filter herzustellen, mit dem insbesondere in Tagebaugebieten das Grundwasser gefaßt und zur Brauch- und Trinkwasser-Gewinnung verwendet werden kann. Selbstverständlich muß der Filter den mechanischen Anforderungen genügen, die sein Einsatzzweck erfordert.

Die erfindungsgemäße Lösung ist den Patentansprüchen zu entnehmen. Sie besteht im wesentlichen in der Verwendung eines bestimmten Bindemittelsystems auf der Basis eines Polyurethan-Klebstoffes. Das Bindemittel enthält kennzeichnungsgemäß eine zinnorganische Verbindung mit einer Molmasse von über 600 als Katalysator und eine Mischung von hochdisperser Kieselsäure und/oder Bentonite mit einem angedickten Alumino-Silikat als Modifizierungsmittel.

Unter "Polyurethan-Bindemittel" wird ein Klebstoff verstanden, der aus Polyisocyanaten, Polyolen, Katalysatoren, Modifizierungsmitteln und Füllstoffen besteht. Bevorzugt wird ein Zweikomponenten-Polyurethan-Klebstoff eingesetzt, wobei ein niedermolekulares Polyisocyanat und ein gleichfalls verhältnismäßig niedrigmolekulares Polyol, das die weiteren Additive enthält, erst kurz vor ihrer Verwendung gemischt werden.

Zur Herstellung des Isocyanat/Polyol-Reaktivharzes kommen insbesondere die an sich bekannten Polyhydroxy-Polyether des Molekulargewichtsbereiches von 60 bis 10 000, vorzugsweise 70 bis 6 000 mit 2 bis 10 Hydroxylgruppen pro Molekül in Frage. Derartige Polyhydroxypolyether werden in an sich bekannter Weise durch Alkoxylierung von geeigneten Startermolekülen erhalten, z.B. von Wasser, Propylenglykol, Ethylenglykol, Glycerin, Trimethylolpropan. Geeignete Alkoxylierungsmittel sind insbesondere Propylenoxid und eventuell auch Ethylenoxid.

Als Polyisocyanate sind alle mehrwertigen aromatischen und aliphatischen Isocyanate geeignet. Vorzugsweise enthalten sie im Mittel 2 bis höchstens 4 NCO-Gruppen. Aromatische Isocyanate werden bevorzugt, insbesondere Diphenylmethandiisocyanat.

Bevorzugt werden die Polyole und Polyisocyanate als Zweikomponenten-Gießharz eingesetzt, wobei ein niedermolekulares Polyisocyanat und ein gleichfalls verhältnismäßig niedermolekulares Polyol erst kurz vor ihrer Verwendung gemischt werden. Das Polyisocyanat wird mit einem bis zu 30 %igem Überschuß an Isocyanat, bezogen auf das Polyol eingesetzt, vorzugsweise mit einem 10 bis 25 %igem Überschuß.

Unter einer "zinnorganischen Verbindung" wird eine Verbindung mit einer oder mehreren Sn-C-Bindungen verstanden. Konkrete Verbindungen sind: Dibutyl- und Dioctyl-zinndilaurat, Dioctyl-zinndi-2-ethylhexoat, Dibutyl- und Dioctyl-zinndistearat, Dibutyl- und Dioctyl-zinndidodecylthiolat, Butyl- und Octyl-zinntris(thioglykolsäure-2-ethylhexoat), Dibutyl- und Dioctyl-zinnbis(thioglykolsäure-2-ethylhexoat), Tributyl- und Trioctyl-zinn(thioglykolsäure-2-ethylhexoat) sowie Tributyl- und Trioctyl-zinntris(thioethylenglykol-2-ethylhexoat), Tributyl- und Trioctyl-zinnbis(thioethylenglykol-2-ethylhexoat), Tributyl- und Trioctyl-zinn(thioethylenglykol-2-ethylhexoat) mit der allgemeinen Formel RₙSn(S-CH₂CH₂OCOC₈H₁₇)₄₋ₙ,
wobei R eine Alkylgruppe mit 4 bis 8 C-Atomen ist, Bis(β-methoxycarbonyl-ethyl)zinn-bis(thioethylenglykol-2-ethyl-hexoat, -zinn-bis(thioglykolsäure-2-ethylhexoat), -zinndilaurat, - zinndidodecylthiolat und Bis(β-acetyl-ethyl)zinn-bis(thioethylenglykol-2-ethylhexoat), -zinn-bis(thioglykolsäure-2-ethyl-hexoat), -zinndilaurat und -zinndidodecylthiolat.

Die zinnorganischen Verbindungen können einzeln oder im Gemisch eingesetzt werden, und zwar in einer Menge von 0,001 bis 0,5, vorzugsweise 0,01 bis 0,25 Gew.-%, bezogen auf das Polyol.

Unter "hochdisperser Kieselsäure" wird eine Kieselsäure mit über 99,8 Gew.-% SiO₂-Gehalt verstanden, die durch Hydrolyse von Siliciumtetrachlorid in einer Knallgasflamme hergestellt wurde. Sie ist z.B. unter dem Warenzeichen "Aerosil" im Handel erhältlich.

Unter "Bentonite" sind verunreinigte Tone zu verstehen, die durch Verwitterung vulkanischer Tuffe entstanden sind. Insbesondere werden Produkte mit dem Warenzeichen "Bentone" eingesetzt.

Eine bevorzugte "Andickung von Alumino-Silikaten" ist die Absorber-Paste, insbesondere auf der Basis von Ricinusöl. Damit soll Feuchtigkeit in den PUR-Komponenten unschädlich gemacht werden. Die Alumo-Silikat-Konzentration richtet sich nach der zu erwartenden Feuchtigkeit und beträgt im allgemeinen 1 bis 12, insbesondere 2 bis 8 Gew.-%, bezogen auf das Polyol.

Das Polyol kann auch 0 bis 60, insbesondere 10 bis 30 Gew.-% mindestens eines Füllstoffes enthalten. Er dient nicht nur dazu, das Gewicht und das Volumen zu erhöhen, sondern auch dazu, die technische Verwendbarkeit zu verbessern. Dazu eignen sich insbesondere Kaolin, Feldspat, Glimmer, Quarzmehl, Bariumsulfat, Aluminiumoxide, Aluminiumoxidhydrate und Aluminiumhydroxide sowie Calciumcarbonat sowohl als Kalkspat als auch als Kalkstein, der gecoatet sein kann. Die Korngröße des Füllstoffes beträgt bis zu 0,05 mm.

Je nach den konkreten Anwendungen kann es angebracht sein, das Polyurethan gegen Abbau zu stabilisieren. Als Antioxidantien eignen sich insbesondere bis zu 1,5 Gew.-% an Irganox 1010, 1076, 3114 und 1425 der Firma Ciba Geigy, Topanol O der Firma ICI, und Goodrite 3114 der Firma Goodrich.
Als UV-Absorber eignen sich insbesondere bis zu 1,5 Gew.-% an Tinuvin P, 328 und 144 (Ciba Geigy), Sanduvor VSU und 3035 (Sandoz), Chimassorb 81 der Firma Chimosa.
Als weitere Stabilisatoren kommen bis zu 1,5 Gew.-% an Tinuvin 765 und 770 der Firma Ciba Geigy, Sanduvor 3050, 3051 und 3052 der Firma Sandoz und Chimassorb 119 der Firma Chimosa sowie Mark LA 62, 63, 67 und 68 der Firma Argus Chemical Corporation in Frage.

Das Bindemittel muß in seiner Zusammensetzung und seiner Menge auf die Körnung des Quarzsandes, insbesondere dessen Staubanteil und auf den Einsatzzweck, insbesondere die Festigkeiten und die Wasserdurchflußrate abgestimmt werden. So verlangt die Verkleinerung der Körnung zunehmend eine spezielle Modifizierung des Bindemittels.

Das Gewichtsverhältnis von Quarzsand : Polyurethan-Bindemittel beträgt vorzugsweise weniger als 20 : 1, insbesondere gleich oder weniger als 16 : 1. Bei einer Körnung zwischen 1,6 und 4,0 mm sind für Filter mit einer Wasserflußrate von 0 m³/min · m² gleiche Gewichtsanteile an Quarzsand und Bindemittel erforderlich. Bei einem Sand mit einer Körnung bis zu 4 mm, jedoch mit 20 Gew.-% an Teilchen unter 1,6 mm - bezogen auf die Gesamtmenge des Sandes - verringert sich der Bindemittelanteil auf ca. 10 Gew.-%, bezogen auf den Sand insgesamt.

Das mit dem Bindemittel zusammengehaltene Filtermaterial ist Quarzsand. Es besteht zu mehr als 85 Gew.-% aus Quarz und hat eine Körnung bis zu 6 mm, insbesondere bis zu 4 mm. Der Quarzsand enthält bis zu 2, insbesondere bis zu 1 Gew.-% an quarzhaltigen Feinstäuben mit einem Durchmesser von weniger als 0,2 mm, insbesondere mit einem Durchmesser von 0,06 bis 0,1 mm. Der Staubanteil richtet sich nach dem Wasch- und Trockenprozeß des Quarzsandes. Eine den konkreten Bedingungen entsprechende Wassedurchflußrate von 0 m³/min · m² bis 3 m³/min · m² wird über unterschiedliche Kornklassierungen des Quarzsandes unter Berücksichtigung des Feinstaubanteiles erreicht.

Unter konkreten Einsatzbedingungen werden dabei die Sieblinien des geologischen Materials eines Grundwasserleiters verstanden. Durch entsprechende Abstufung der Kornklassierungen, wie oben beschrieben, wird damit im Regelfalls unter Nutzung einer Kiesschüttung zwischen Grundwasserleiter und Filter eine laminare Grundwasserströmung in den Brunnen erreicht. Dabei wirkt die Wandung des beschriebenen Filters als 2. Kiesschüttung und verstärkt den Effekt der laminaren Strömung.

Die geometrische Form der Filter ist im Prinzip beliebig und richtet sich nach den konkreten Einsatzzwecken. Die Filter können insbesondere Platten oder Rohre darstellen. Vorzugsweise handelt es sich um kreisrunde zylinderförmige Rohre mit einer gut handhabbaren Länge. Durchmesser und Dicke richten sich nach der Größe und Länge des daraus hergestellten Brunnens.

Vorzugsweise ist der Filter frei von zusätzlichen Elementen zur Erhöhung der mechanischen Festigkeit. Er besteht also aus dem Quarzsand mit seinem Staubanteil und dem Polyurethan-Bindemittel-System.

Das Filtermaterial besteht im allgemeinen aus 80 bis 95 Gew.-% an Kiessand und 5 bis 20 Gew.-% an Polyurethan-Klebstoff. Der Polyurethan-Klebstoff besteht im allgemeinen aus 50 bis 99 Gew.-% an Isocyanat/Polyol-Reaktionsharz, zu 0,0005 bis 0,25 Gew.-% an zinnorganischen Verbindungen, zu 0,03 bis 2,5 Gew.-% an Kieselsäure und/oder Bentonite, zu 0,5 bis 6 Gew.-% an Alumino-Silikaten und zu 0 bis 50 Gew.-% an Füllstoffen.

Die Filter werden hergestellt, indem man da Quarzsand mit einer aus dem Wasch- und Trockenprozeß gegebenen Staubmenge das Polyurethan-Bindemittel-System zusetzt. Vorzugsweise werden die beiden Polyurethan-Komponenten, die Katalysatoren und Modifizierungsmittel enthalten, zunächst gemeinsam gemischt und dann zum Quarzsand zugegeben. Nun wird das Gemenge innig gemischt und in eine Form gegeben. Danach wird auf eine Temperatur von über 120 °C, insbesondere auf eine Temperatur zwischen 125 bis 150 °C für höchstens 10 min erwärmt. Ohne Abkühlen wird entformt. Die so erhaltenen Filter können nach Abkühlung auf Raumtemperatur ihrem Verwendungszweck sofort zugeführt werden, d.h. sie können ohne weitere Behandlung bei der Trinkwassergewinnung eingesetzt werden.

Das erfindungsgemäße Aushärtungsverfahren ist also sehr wirtschaftlich, da übliche Polyurethan-Klebstoffe sehr lange Aushärtungszeiten bei Temperaturen von über 100 °C verlangen, wenn das Filtrat Trinkwasser-Qualität haben soll.

Die erfindungsgemäßen Filter eignen sich zur Gewinnung von Brauch- und Trinkwasser aus Grundwasser bzw. zur Infiltration von Wasser in den Boden. Aufgrund der frei einstellbaren Wasserdurchtrittsraten können Brunnen gebaut werden, die eine Verbindung verschiedener Grundwasserleiter ausschließen, indem Grundwasserleiter mit unerwünschtem Wasser durch wasserundurch lässige Rohre, den sogenannten Vollrohren mit einer Wasserdurchlässigkeit von 0 m³/min · m² ausgebaut werden. Erdschichten mit dem gewünschten Wasser werden mit wasserdurchlässigen Filtern ausgebaut.

Es ist aber auch möglich, mit den Filtern das Erdreich zu bewässern, z.B. indem man Infiltrationsbrunnen herstellt.

Der Einsatz der erfindungsgemäßen Filter unter Verwendung von Quarzsand mit Feinstkornanteil von weniger als 1,6 mm Durchmesser erspart die kostspielige Reinigung des ursprünglichen Sandes, die nach dem bekannten Verfahren gemäß der DD 109 319 erforderlich ist. Gerade diese Feinstkornanteile erlauben die Herstellung von Filtern mit unterschiedlichen Wasserdurchtrittsraten, und zwar zu relativ niedrigen Kosten aufgrund des geringen Verbrauches an Polyurethan-Bindemitteln.

Die Erfindung wird nun anhand von Beispielen im einzelnen erläutert:

### Beispiel 1: Herstellung eines Filterrohres

Die Harzkomponente besteht aus
- 53: Teilen eines difunktionellen Polypropylenglykols mit einer OH-Zahl von ca. 280,
- 8: Teilen eines trifunktionellen Polypropylenglykols mit einer OH-Zahl von ca. 380,
- 29,17: Teilen eines Kaolins,
- 8,00: Teilen an Natrium-Aluminium-Silikat in Rizinusöl (1 : 1-Mischung),
- 0,03: Teilen Dibutyl-zinndilaurat und
- 1,8: Teilen Bentone 34.
(Bei den Angaben handelt es sich um Gewichts-Teile.)

Die Härterkomponente besteht aus Diphenylithan-4,4'-diisocyanat.
100 Gew.-Teile des Harzes werden mit 65 Gew.-Teilen des Härters bei ca. 20 °C mit einem dynamischen Mischer vermischt und anschließend in einem Schneckenmischer mit der vierzehnfachen Menge an Kiessand mit einer Partikelgröße zwischen 1,0 und 4,0 mm bei einem Staubanteil von 0,5 Gew.-% vermengt.
Dieses Gemenge wird in eine Rohrform mit einer Länge von 1 m eingebracht und 9 Minuten bei 135 °C gehärtet. Nach dieser Zeit läßt sich das Filterrohr praktisch ohne Abkühlung problemlos entformen, ohne an der Formwand zu haften.
Nach Abkühlung des Filterrohres auf Raumtemperatur ist eine sofortige Verwendung bei definierter Wasserdurchflußrate gemäß gewählter Kornklassierung möglich. Entsprechend dem beschriebenen Beispiel liegt die Wasserdurchflußrate bei ca. 3 m³/min · m².

### Beispiel 2: Herstellung eines Vollrohres

Die Harzkomponente besteht aus
- 30: Gew.-Anteilen an difunktionellem Polypropylenglykol mit einer OH-Zahl von ca. 280 mg KOH/g,
- 12: Gew.-Teilen an trifunktionellem Polypropylenglykol mit einer OH-Zahl von ca. 380,
- 49,08: Gew.-Teilen an Kalksteinmehl mit einer Partikelgröße von < 0,05mm,
- 8: Gew.-Teilen an Natrium-Aluminium-Silikat in Rizinusöl (1 : 1-Mischung),
- 0,02: Gew.-Teilen Dibutylzinndilaurat und
- 0,90: Gew.-Teilen an Aerosil 200.

Die Härterkomponente besteht wiederum nur aus Diphenylmethan-4,4'-diisocyanat (Rohprodukt).
Harz und Härter werden in einem Gewichtsverhältnis von 3 : 1 mit einem dynamischen Mischer vermischt und anschließend in einem Schneckenmischer bei Raumtemperatur mit der achtfachen Menge an Kiessand mit einer Partikelgröße zwischen 0,5 und 1,6 mm bei einem Staubanteil von 0,8 Gew.-% intensiv vermengt.
Dieses Gemenge wird in eine Rohrform eingebracht und 9 Minuten bei 130 °C gehärtet. Dann kann das Filterrohr praktisch ohne Abkühlung entformt werden, ohne an der Formwand zu haften.
Nach Abkühlung des Filterrohres auf Raumtemperatur ist eine sofortige Verwendung bei definierter Wasserdurchflußrate gemäß gewählter Kornklassierung möglich. Entsprechend dem beschriebenen Beispiel liegt die Wasserdurchflußrate unter 0,1 m³/min ·m².

### Beispiel 3: Vergleichsbeispiel

Die Harzkomponente besteht aus
- 56: Gew.-Teilen eines difunktionellen Polypropylenglykols mit einer OH-Zahl von ca. 280 mg KOH/g,
- 10: Gew.-Teilen eines trifunktionellen Polypropylenglykols mit einer OH-Zahl von 380 mg KOH/g,
- 33,97: Gew.-Teilen Kaolin und
- 0,03: Gew.-Teilen Dibutylzinndilaurat.

Als Härterkomponente dient wiederum Diphenylmethan-4,4'-diisocyanat.
100 Gew.-Teile des Harzes werden mit 67 Gew.-Teilen des Härters und anschließend mit Quarzsand analog zum Beispiel 1 gemischt und in die Rohrform eingebracht und wiederum 9 Minuten bei 135 °C gehärtet.
Danach ließ sich das Filterrohr nur sehr schwer entformen, wobei es teilweise an der Form haften blieb. Im Unterschied zu den Beispielen 1 und 2 nimmt die Klebstoffkonzentration von oben nach unten deutlich zu. Nach dem Abkühlen lassen sich mit mäßigem Kraftaufwand an der Oberkante des Rohres Kiespartikel mit der Hand ausbrechen. Außerdem erweicht dieses Rohr im Gegensatz zu den erfindungsgemäßen Rohren bereits bei eintägiger Lagerung in Wasser sehr stark. Nach 4 Tagen Lagerung in Wasser können von Hand Teile aus dem Rohr ausgebrochen werden.

## Patentansprüche

1. Filter aus einer mit Polyurethan-Klebstoff gebundenen Feststoffschicht aus Quarzsand zur Fassung und Hebung von Grundwasser zur Aufbereitung von Brauch- und Trinkwasser bzw. zur Infiltration von Wasser in den Boden, dadurch gekennzeichnet, daß das Polyurethan-Bindemittel neben dem Polyol und dem Polyisocyanat eine zinnorganische Verbindung mit einer Molmasse von mehr als 600 als Katalysator und eine Mischung von hochdisperser Kieselsäure und/oder Bentonite mit einer Andickung von Alumino-Silikaten als Modifizierungsmittel enthält.

2. Filter nach Anspruch 1, gekennzeichnet durch Aerosil als hochdisperse Kieselsäure, durch Bentone als Bentonite und durch die Absorber-Paste als Andickung von Alumino-Silikaten.

3. Filter nach Anspruch 1, gekennzeichnet durch das Mengenverhältnis von Quarzsand : Polyurethan-Bindemittel von kleiner als 20 : 1, insbesondere gleich bzw. kleiner als 16 : 1.

4. Filter nach Anspruch 1, dadurch gekennzeichnet, daß der Quarzsand mit einer Kornklassierung bis zu 6 mm, insbesondere bis zu 4 mm, einen staubförmigen Anteil unter 0,2, insbesondere zwischen 0,06 und 1,0 mm Durchmesser enthält.

5. Zylinderförmiger Filter nach mindestens einem der Ansprüche 1 bis 4, gekennzeichnet durch einen kreisförmigen Querschnitt und durch das Fehlen von zusätzlichen Elementen zur Erhöhung der mechanischen Festigkeit.

6. Herstellung der Filter nach mindestens einem der Ansprüche 1 bis 5, gekennzeichnet durch Mischen der Komponenten Quarzsand, mit definierten Feinststaubanteil und Polyurethan-Bindesystem, durch nachfolgendes Füllen von Formen mit der Mischung sowie durch Aushärtung bei Temperaturen von mehr als 120 °C, vorzugsweise bei Temperaturen zwischen 125 bis 150 °C und durch Entformen ohne Abkühlung.

7. Verwendung der Filter nach mindestens einem der Ansprüche 1 bis 5 zur Herstellung von Brunnen zur Entwässerung in Tagebaugebieten, zur Herstellung von Brunnen zur Trinkwassergewinnung, zur Entwässerung von Baugruben und zur Infiltration von Wasser zur Bewässerung.

## Claims

1. A filter of a polyurethane-adhesive-bonded solid layer of silica sand for holding and raising ground water, for treating industrial water and drinking water and for the infiltration of water into the ground, characterized in that, in addition to the polyol and the polyisocyanate, the polyurethane binder contains an organotin compound with a molecular weight of more then 600 as catalyst and a mixture of highly dispersed silica and/or bentonite with thickened alumosilicates as modifier.

2. A filter as claimed in claim 1, characterized by Aerosil as the highly dispersed silica, by Bentone as the bentonite and by absorber paste as the thickened alumosilicate.

3. A filter as claimed in claim 1, characterized by a quantity ratio of silica sand to polyurethane binder of less than 20:1 and, more particularly, equal to or less than 16:1.

4. A filter as claimed in claim 1, characterized in that the silica sand with a particle classification of up to 6 mm and, more particularly, up to 4 mm contains a duct-like component with a diameter of less than 0.2 mm and, more particularly, between 0.06 and 1.0 mm.

5. A cylindrical filter as claimed in at least one of claims 1 to 4, characterized by a circular cross-section and by the absence of additional elements for increasing mechanical strength.

6. A process for the production of the filter claimed in it least one of claims 1 to 5, characterized in that the components - silica sand with a predetermined fine dust content and the polyurethane binder system - are mixed, the resulting mixture is introduced into molds, cured at temperatures above 120°C and preferably at temperatures of 125 to 150°C and demolded without cooling.

7. The use of the filters claimed in at least one of claims 1 to 5 for the construction of wells for drainage in surface mining regions, for the construction of wells for the production of drinking water, for the drainage of building pits and for the infiltration of water for irrigation.

## Revendications

1. Filtre composé d'une couche de matière solide liée par du polyuréthanne en sable quartzeux destiné à la captation et à la remontée d'eau souterraine pour la préparation d'eau industrielle et d'eau potable ou pour l'infiltration d'eau dans le sol,
caractérisé en ce que
le liant polyuréthanne contient outre le polyol et le polyisocyanate un composé organostanneux ayant une masse molaire de plus de 600 comme catalyseur et un mélange d'acide silicique et/ou de bentonite fortement dispersés avec un épaississement de silicates alumineux comme agent modificateur.

2. Filtre selon la revendication 1,
caractérisé par
de l'aérosil en tant qu'acide silicique fortement dispersé, par de la bentone en tant que bentonite et par de la pâte d'absorbeur en tant qu'épaississant de silicates alumineux.

3. Filtre selon la revendication 1,
caractérisé par
le rapport quantitatif sable quartzeux : liant de polyuréthanne inférieur à 20 : 1, en particulier égal ou plus petit que 16 : 1.

4. Filtre selon la revendication 1,
caractérisé en ce que
le sable quartzeux contient avec un classement de grains allant jusqu'à 6 mm, en particulier jusqu'à 4 mm, une proportion sous forme de poussière inférieure à 0,2, en particulier comprise entre 0,06 et 1,0 mm de diamètre.

5. Filtre de forme cylindrique selon au moins une des revendications 1 à 4,
caractérisé par
une section transversale circulaire et par le manque d'éléments supplémentaires pour augmenter la résistance mécanique.

6. Préparation des filtres selon au moins une des revendications 1 à 5,
caractérisée par
le mélange du composant sable quartzeux ayant une proportion définie de poussière très fine et le système liant de polyuréthanne, par le remplissage suivant de moules avec le mélange ainsi que par le durcissement à des températures supérieures à 120°C, de préférence à des températures comprises entre 125 et 150°C et par le démoulage sans refroidissement.

7. Utilisation des filtres selon au moins une des revendications 1 à 5 pour la création de puits destinés au drainage de l'eau dans des zones d'exploitation à ciel ouvert, pour la réalisation de puits destinés à l'obtention d'eau potable, pour le drainage de fouilles et pour l'infiltration d'eau pour l'irrigation.
